# EUROPÄISCHE PATENTSCHRIFT

(11) **EP 1 895 644 B1**
(45) Veröffentlichungstag und Bekanntmachung des Hinweises auf die Patenterteilung: **21.04.2010**
(21) Anmeldenummer: 07006501.6
(22) Anmeldetag: 29.03.2007
(51) Int. Cl.: H02K 21/12, H02K 11/00, H02K 3/47

(54) **Elektrische Maschine mit eisenlosen Feldspulen**
Electric machine with non-ferrous excitation coils
Machine électrique dotée de bobines de champs non ferreuses

(30) Priorität: 28.08.2006 DE 102006040222; 28.08.2006 DE 102006040223; 28.08.2006 DE 102006040221; 28.08.2006 DE 102006040220
(43) Veröffentlichungstag der Anmeldung: 05.03.2008
(73) Patentinhaber: Just, Franc, 71229 Leonberg (DE)
(72) Erfinder: Just, Franc, 71229 Leonberg (DE)
(74) Vertreter: LOUIS, PÖHLAU, LOHRENTZ

(56) Entgegenhaltungen:
- EP-A- 0 018 801
- EP-A- 0 422 539
- DE-A1- 10 137 201
- DE-A1- 10 335 688
- DE-A1- 19 639 670
- DE-A1- 19 852 650
- DE-C1- 4 414 527

## Beschreibung

Die Erfindung betrifft eine elektrische Maschine mit eisenlosen Feldspulen nach dem Oberbegriff des Anspruchs 1. ·

Elektrische Maschinen, d.h. Motoren und Generatoren, können mit eisenlosen Feldspulen ausgebildet sein. Vorteilhafterweise weisen solche elektrischen Maschinen kein magnetisches Rastverhalten auf, d.h. der Roter kann im stromlosen Betrieb der Maschine leicht gedreht werden. Sie finden insbesondere als Elektromotoren zum Antrieb von Fahrzeugen mit autonomer Energiequelle Anwendung. Bei den Fahrzeugen kann es sich beispielsweise um Automobile mit Elektroantrieb oder Hybridantrieb handeln, aber auch um Krankenfahrstühle oder dergleichen. Die Elektromotoren für derartige Fahrzeuge sollen kleine Abmessungen, geringes Gewicht und einen hohen Wirkungsgrad aufweisen.

In der EP 0 422 539 A1 ist eine elektrische Maschine mit eisenlosen Feldwicklungen beschrieben, bei der es sich um einen Motor oder um einen Generator handeln kann. Die Feldwicklungen des scheibenförmigen Stators stehen in Wechselwirkung mit Permanentmagneten eines oder mehrerer scheibenförmiger Rotoren die in Richtung der Motordrehachse vor und/oder hinter dem Stator angeordnet sind. Die magnetischen Feldlinien der Permanentmagnete sind axial gerichtet. Die zur Motorwirkung benötigten aktiven Abschnitte der Feldwicklungen sind auf der Vorderseite und der Rückseite des scheibenförmigen Stators angeordnet und über die Stirnkante des Stators geführt.

In der DE 198 52 650 A1 ist ein Motor mit eisenloser Feldwicklung und scheibenförmigem Stator beschrieben, dessen Feldwicklungen mit V-förmigem Verlauf auf der Vorderseite und der Rückseite des Stators ausgebildet sind, wobei die Feldwicklungen über die Stirnseite des Stators geführt sind. Die beiden V-Schenkel der Feldwicklungen bilden radialen Abschnitte, die in Wechselwirkung mit Permanentmagneten zweier vor und hinter dem Stator angeordneter scheibenförmiger Rotoren stehen.

Nachteilig bei beiden Motoren ist die komplizierte Geometrie der Feldspulen sowie die große radiale Erstreckung der Feldspulen, die beispielsweise die Unterbringung des Motors in einer Radnabe verhindert.

In der DE 101 37 201 A1 ist eine elektrische Maschine beschrieben, bei der eine in einem Luftspalt einer Permanentmagnet-Anordnung angeordnete Luftspaltwicklung mit mindestens teilweise schrägen oder bogenförmig zur Bewegungsrichtung verlaufenden Leitern ausgebildet ist. Die Luftspaltwicklung ist topfförmig ausgebildet. Die elektrische Maschine kann elektronisch kommutiert sein.

In der DE 44 14 527 C1 ist eine elektronisch kommutierte Gleichstrommaschine beschrieben, die einen Permanentmagnet-Rotor aufweist mit einem zylindrischen Luftspalt mit geradlinigem radialen Feldlinienverlauf und ständig wechselnder Polarität. Weiter weist der Motor eine eisenlose Statoranordnung mit einer selbsttragenden Statorwicklung auf, die aus drahtförmigem Leitermaterial und ausgehärtetem Kunstharz besteht und die gerade Wicklungsabschnitte aufweist, die sich innerhalb des Luftspalts erstrecken.

Der Erfindung liegt nun die Aufgabe zugrunde, eine im Aufbau und in der Montage einfache elektrische Maschine mit eisenlosen Feldspulen zu schaffen.

Die Aufgabe der Erfindung wird mit einer elektrischen Maschine mit einem Rotor und einem Stator gelöst, aufweisend mit einer Steuereinheit verbundene eisenlose Feldspulen und Permanentmagnetringe mit einem ringförmigen Luftspalt, wobei vorgesehen ist, dass die elektrische Maschine aus zwei gleichartigen Teilmaschinen aufgebaut ist, wobei Wickelkörper beider Maschinen einander zugewandt auf einer Trägerplatine angeordnet sind, und dass zumindest ein Teil der Steuereinheit unmittelbar an den Feldspulen angeordnet ist.

Der Begriff "eisenlos" umfasst nicht nur das Material Eisen oder eine Eisenlegierung (beispielsweise Dynamoblech) an sich, sondern beliebige magnetische Materialien, vorzugsweise weichmagnetische Materialien. Beispielsweise sind Ferrite als magnetisches Kernmaterial für Feldspulen verwendbar. Spulen mit Ferritkern sind beispielsweise aus der Hochfrequenztechnik bekannt.

Die vorgeschlagene elektrische Maschine mit eisen losen Feldspulen zeichnet sich dadurch aus, dass die elektrische Maschine aus zwei gleichartigen Teilmaschinen aufgebaut ist, deren Wickelkörper einander zugewandt auf einer Trägerplatine angeordnet sind, die so einen Verbundkörper mit symmetrischem T-förmigen Querschnitt ausbilden, der gegenüber einem topfförmigen Körper mit symmetrischem L-Querschnitt eine Symmetrieebene aufweist, so dass Zwangskräfte infolge einseitiger Belastung auf die Achslager der elektrischen Maschine vermieden sind. Durch die Aufteilung des Radnabenmotors in zwei Teilmotore ist die pro Wickelkörper umgesetzte elektrische Leistung halbiert, so dass die thermische Belastung der Feldspulen reduziert ist und zugleich durch die Vergrößerung der Abstrahlungsfläche die Abführung der Verlustwärme verbessert ist.

Weil zwischen den Feldspulen und der Steuereinheit im wesentlichen keine Zuleitungen vorgesehen sind, werden Leitungsverluste vermieden oder zumindest sehr eingeschränkt, die insbesondere bei mit kleiner Betriebsspannung betriebenen elektrischen Motoren zu verzeichnen sind. Das Bordnetz von Personenkraftwagen ist vorzugsweise auf 12 V ausgelegt, so dass beispielsweise bei einer Leistungsaufnahme des Motors von 600 W der Betriebsstrom 50 A beträgt. Weil an jedem stromdurchflossenen Leiter ein Spannungsabfall eintritt, verursacht ein Leitungswiderstand von beispielsweise 20 mΩ bereits einen Spannungsabfall von 1 V. Für hohe Ströme geeignete elektrische Leitungen sind wegen des erforderlichen geringen Leitungswiderstandes materialaufwendig und weisen eine vergleichsweise hohe Masse auf. Weiter von Vorteil ist, dass parasitäre Leitungskapazitäten und/oder Leitungsinduktivitäten reduziert werden, die leistungsmindernd wirken können und/oder elektromagnetische Störstrahlung verursachen können.

Es kann vorgesehen sein, dass es sich bei der Steuereinheit um eine Steuereinheit für Pulsweitenmodulation handelt. Die Pulsweitenmodulation ist ein Verfahren, bei dem durch die Variation der Pulsweite bei konstanter Pulshöhe, d.h. bei konstanter Spannung, eine über die Zeit integrierte veränderliche Spannung bereitgestellt wird, beispielsweise zur Drehzahlregelung eines Gleichstrommotors. Die Pulsfrequenz kann beispielsweise 28 kHz sein. Es kann weiter vorgesehen sein, dass positive und negative Impulse aufeinander folgen, so dass durch das Verhältnis der Pulsweite der positiven und der negativen Impulse auch die Drehrichtung des Gleichstrommotors steuerbar ist. Bei einem Pulsverhältnis von 1:1 steht der Motor, wobei der Motor infolge des ständigen Umpolens der Gleichspannung rüttelt. Das Rütteln bei Stillstand sowie bei kleinen Drehzahlen reduziert die Lagerreibung, so dass der Motor auch bei kleinen Drehzahlen gut steuerbar ist.

In einer vorteilhaften Ausbildung kann vorgesehen sein, dass die elektronischen Leistungsschaltglieder der Steuereinheit auf einem gemeinsamen Trägersubstrat angeordnet sind. Bei dem Leistungsschaltglied kann es sich um einen Transistor, Triac oder dergleichen handeln, das als kontaktloser elektronischer Ein/Aus-Schalter ausgebildet ist. Bei dem Trägersubstrat kann es sich beispielsweise um ein Halbleitersubstrat, beispielsweise hochreines Silizium handeln, auf dem das Leistungsschaltglied aufgebaut ist. Das Leistungsschaltglied kann weitere elektronische Bauelemente, wie einen oder mehrere Transistoren, umfassen die beispielsweise die zur Ansteuerung benötigte Schaltleistung herabsetzen, so dass es der weiter oben bevorzugten idealen Ausbildung als leistungslos steuerbarer Schalter nahe kommt. Beispielsweise können das Leistungsschaltglied und ein zusätzliches Bauelement eine sogenannte Darlington-Schaltung bilden, wenn es sich dabei um Bipolartransistoren handelt. Die beschriebenen Anordnungen können Endstufen der Steuereinrichtung bilden.

In einer weiteren vorteilhaften Ausbildung kann vorgesehen sein, dass die Steuereinheit auf dem Trägersubstrat angeordnet ist. Es können also neben den für die Leistungsschaltglieder notwendigen elektronischen Bauelementen auch die für die Steuerung der erfindungsgemäßen elektrischen Maschine benötigten elektronischen Bauelemente auf dem Trägersubstrat angeordnet bzw. ausgebildet sein. Eine solche Ausbildung kann jedoch besondere Maßnahmen zur Schaltungsauslegung und/oder zur thermischen Isolation und/oder zur Kühlung erfordern, um die Funktionssicherheit der Steuereinheit zu sichern.

Es kann weiter vorgesehen sein, dass mehrere elektronische Leistungsschaltglieder eine gemeinsame Schutzkapselung aufweisen. Die unter einer gemeinsamen Schutzkapselung angeordneten Leistungsschaltglieder können, wie vorstehend beschrieben, auf einem gemeinsamen Trägersubstrat angeordnet sein. Es kann sich aber auch um separate ungekapselte oder gekapselte Leistungsschaltglieder handeln, die unter einer gemeinsamen Schutzkapselung angeordnet sind. Die Schutzkapselung kann vorgesehen sein, um die Leistungsschaltglieder vor Verschmutzung und/oder vor mechanischer Beschädigung und/oder vor Flüssigkeiten und Gasen zu schützen. Elektronische Halbleiterbauelemente müssen beispielsweise vor Einwirkung von Sauerstoff und Wasserdampf bzw. Wasser geschützt sein.

In einer vorteilhaften Ausbildung kann vorgesehen sein, dass die Schutzkapselung als Kühlkörper ausgebildet ist.

In einer weiteren vorteilhaften Ausbildung kann vorgesehen sein, dass die Steuereinheit innerhalb der Schutzkapselung angeordnet ist. Es kann sich dabei um eine erweiterte Schutzkapselung handeln, die einen zusätzlichen Aufnahmeraum für die zur Ansteuerung der Leistungsschaltglieder bestimmten Komponenten der Steuereinheit aufweist, oder welche eine Steuereinheit mit integrierten Leistungsschaltgliedern, wie weiter oben beschrieben, umgibt.

Die Schutzkapselung kann als eine Schutzhaube ausgebildet sein, die mit der Oberseite und/oder den Seitenrändern des Trägersubstrats verbunden ist. Es kann sich dabei vorzugsweise um eine stoffschlüssige Verbindung handeln. Es kann aber auch eine lösbare Verbindung vorgesehen sein, wobei zur Abdichtung des von der Schutzkapselung umschlossenen Raumes ein Dichtelement vorgesehen sein kann, beispielsweise eine Flachdichtung, ein O-Ring oder dergleichen. Bei der Schutzkapselung kann es sich auch um eine Vergussmasse handeln, beispielsweise ein gießfähiges Epoxidharz oder dergleichen, dessen Außenkontur durch eine Gießform bestimmt sein kann.

In einer vorteilhaften Ausbildung kann vorgesehen sein, dass die Steuereinheit auf der Trägerplatine angeordnet ist. Es kann weiter vorgesehen sein, dass die Feldspulen sowie die Leistungsschaltglieder auf der Trägerplatine angeordnet sind, wie weiter oben ausgeführt. Die Trägerplatine kann einstückig ausgebildet sein, beispielsweise nach Art einer einseitig oder doppelseitig mit Kupfer kaschierten Platine aus Isolierstoff, die für sogenannte gedruckte Schaltungen vorgesehen ist. Es kann sich bei der Trägerplatine aber auch um eine mehrstückige Trägerplatine handeln, die beispielsweise einen metallischen Grundkörper und eine oder mehrere darauf befestigte kupferkaschierte Platinen aufweist und weiter eine mechanisch stabile Montagebasis für die Feldspulen bildet.

Eine weitere vorteilhafte Ausbildung sieht vor, dass die Steuereinheit mit Schleifkontakten und/oder Steckkontakten verbunden ist. Die Schleifkontakte können ineinander angeordnete konzentrische Schleifringe oder nebeneinander angeordnete Schleifringe aufweisen, die mit Schleifbürsten zusammenwirken. Es ist also vorgesehen, die Schleifringe und/oder die Schleifbürsten auf der Trägerplatine anzuordnen und sie mit der Steuereinheit zu verbinden. Unter den Steckkontakten werden sowohl "männliche" als auch "weibliche" Steckkontakte verstanden, d.h. sowohl Stecker als auch Buchsen. Schleifkontakte können bevorzugt sein, wenn die Feldspulen als Rotor wirken. Steckkontakte können bevorzugt sein, wenn die Feldspulen als Stator wirken und die elektrische Maschine leicht austauschbar sein soll. Die vorstehend beschrieben Kontakte können sowohl für die Stromversorgung der Steuereinheit als auch zur Übertragung von Steuersignalen vorgesehen sein.

In einer anderen vorteilhaften Ausbildung kann vorgesehen sein, dass die Steuereinheit einen oder mehrere drahtlose Steuereingänge aufweist. Die Steuereingänge können zur Einspeisung von Steuerbefehlen vorgesehen sein, sie können aber auch zur Einspeisung von Sensorsignalen vorgesehen sein.

Vorteilhafterweise kann vorgesehen sein, dass die Steuereinheit einen oder mehrere induktive Steuereingänge aufweist. Der induktive Steuereingang kann auch vorgesehen sein, um die Drehlage oder die Drehzahl der elektrischen Maschine zu erfassen.

Es kann weiter vorgesehen sein, dass die Steuereinheit einen oder mehrere Signalausgänge aufweist, beispielsweise zur Rückmeldung des Betriebszustandes, von Störungszuständen oder dergleichen.

Zur Drehlagebestimmung des Rotors können Hallsensoren vorgesehen sein. Hallsensoren nutzen den sogenannten Hall-Effekt zur Lageerfassung. Wird ein Hallsensor von einem Strom durchflossen und in ein senkrecht dazu verlaufendes Magnetfeld gebracht, liefert er eine Ausgangsspannung, die proportional zum Produkt aus magnetischer Feldstärke und Strom ist. Es handelt sich bei dem Hallsensor um einen berührungs- und kontaktlosen Signalgeber.

Es ist möglich, dass die Hallsensoren durch ein Bussystem mit der Steuereinheit verbunden sind.

Es kann vorgesehen sein, dass jeder der Permanentmagnetringe aus 2 • n Magnetpaaren ausgebildet ist und pro Permanentmagnetring m • n Feldspulen vorgesehen sind, die n Feldspuleneinheiten bilden, die abschnittsweise in den ringförmigen Luftspalt eintauchen. Jeder Permanentmagnetring weist also eine geradzahlige Anzahl von Magnetpaaren auf. Die Feldspulen sind in n Feldspuleneinheiten zusammengefasst, die jeweils mit zwei Magnetpaaren zusammenwirken, vorteilhafterweise mit zwei benachbarten Magnetpaaren.

Es kann vorgesehen sein, dass die Anzahl m der Feldspulen einer Feldspuleneinheit ≥ 1 ist, vorzugsweise dass m = 3 bis 5 ist.

Eine besonders vorteilhafte Ausführung kann 5 Feldspulen vorsehen, die mit zwei einander benachbarten Magnetpaaren zusammenwirken.

Es kann vorgesehen sein, dass jeweils die erste bis m-te der m Feldspulen (51 bis 55) einer Feldspuleneinheit eine voneinander unabhängig steuerbare Feldspulengruppe bilden, die mit jeweils einer von m Endstufen der Steuereinheit verbunden ist. Auf diese Weise ist die Zuverlässigkeit der erfindungsgemäßen elektrischen Maschine erhöht, weil jede der besagten Feldspulengruppen eine funktionsfähige elektrische Maschine bilden, so dass beim Ausfall von einer oder mehreren Feldspulengruppen die elektrische Maschine funktionsfähig bleibt, wenn auch mit eingeschränkter Leistung. Ein weiterer Aspekt ist die Verwendung von zwei gleichartigen Teilmaschinen, so dass auch bei Ausfall einer Teilmaschine die elektrische Maschine funktionsfähig ist, wenn auch mit eingeschränkter Leistung.

Weiter kann vorgesehen sein, dass die m Feldspulen mit teilweiser Überlappung angeordnet sind. Die m Feldspulen sind also wie Dachschindeln angeordnet, so dass die in den Luftspalt eintauchenden aktiven Abschnitte der Feldspulen mit gleichem Teilungsabstand t angeordnet sind. Bei dem Teilungsabstand handelt es sich nicht um den Abstand zwischen aktiven Abschnitten zweier benachbarter Feldspulen, beispielsweise der Hinterkante des einen Abschnitts und der Vorderkante des anderen Abschnitts, sondern um den Abstand analoger Strecken bzw. Punkte der Abschnitte, beispielsweise um den Abstand der Vorderkante des einen Abschnitts zu der Vorderkante des anderen Abschnitts oder um den Abstand der Mittelpunkte der beiden Abschnitte. Der Teilungsabstand kann durch den Abstand auf der Mantelfläche des durch die Feldspulen gebildeten Hohlzylinders definiert sein oder durch einen Winkelabstand, wobei der Scheitelpunkt des Teilungswinkels mit der Drehachse des Rotors zusammenfällt. Die beiden aktiven Wicklungsabschnitte der Feldspulen haben den Abstand A = m • t, wobei m die Anzahl der Feldspulen eines Feldspulenbereichs bezeichnet.

Insbesondere wenn die Feldspulen als rahmenförmige Feldspulen ausgebildet sind, kann es beim Überlappen der Feldspulen zu Kollisionen kommen. Deshalb kann vorgesehen sein, dass einige der Feldspulen um die Längsachse der bandförmigen Wicklung gefaltet werden. Dazu werden die Verbindungsabschnitte der aktiven Abschnitte der Feldspulen um 90° oder um - 90° geschwenkt, so dass sie vor oder hinter der vorzugsweise mittleren Feldspule verlaufen. Weiter kann vorgesehen sein, dass die aktiven Wicklungsabschnitte einiger Feldspulen mit größerer Länge ausgebildet sind, so dass die Verbindungsabschnitte über und unter den anderen Feldspulen verlaufen.

Es kann vorgesehen sein, dass die magnetischen Feldlinien des Magnetpaars radial gerichtet sind. Die magnetischen Flusslinien in dem Luftspalt des Magnetpaars bzw. des Permanentmagnetrings und die in den Luftspalt eintauchenden (aktiven) Abschnitte der Feldspulen sind also senkrecht zueinander angeordnet. Deshalb ist das um den aktiven Abschnitt der stromdurchflossenen Feldspule ausgebildete Magnetfeld zu dem Magnetfeld im Luftspalt so ausgerichtet, dass eine optimale Wechselwirkung der beiden einander abstoßenden oder anziehenden Magnetfelder ausgebildet ist.

Weiter kann vorgesehen sein, dass zwei aufeinanderfolgende Magnetpaare mit entgegengesetzter magnetischer Flussrichtung ausgebildet sind.

Es kann vorgesehen sein, dass zwei aufeinander folgende Magnetpaare mit Abstand zueinander angeordnet sind. Der Abstand kann so gewählt sein, dass er etwa der Breite des aktiven Abschnitts einer Feldspule entspricht. Es kann aber auch vorgesehen sein, dass zwischen zwei aufeinander folgenden Magnetpaaren kein Abstand, d.h. kein Kontaktabstand, oder kein relevanter Abstand, d.h. ein minimaler Abstand ausgebildet ist. Der Abstand zwischen zwei benachbarten Magnetpaaren kann beispielsweise auf eine Klebefuge reduziert sein.

Es kann vorgesehen sein, dass die Feldspule stromlos geschaltet ist, wenn der Rotor eine Drehlage einnimmt, bei der die in den Luftspalt des Permanentmagnetrings eintauchenden Wicklungsabschnitte der Feldspule sich außerhalb des Luftspalts befinden. Auf diese Weise wird Energie gespart, ohne das Leistungsvermögen der elektrischen Maschine herabzusetzen.

Es kann vorgesehen sein, dass die Feldspulen einen freitragenden vorzugsweise topfförmigen Wickelkörper bilden. Die Feldspulen sind dabei auf dem zylindrischen Topfmantel angeordnet, wobei der Topfboden als Stütz- und/oder Tragelement für den Topfmantel dienen kann. Der Topfboden kann beispielsweise die Zu- und Ableitungen der Feldspulen aufnehmen. Wenn, wie weiter oben beschrieben, die elektrische Maschine aus zwei gleichartigen Teilmaschinen aufgebaut ist, kann der topfförmige Wickelkörper als ein beidseitig offener Topf mit einem mittigen Boden ausgebildet sein, der wegen seiner symmetrischen Ausbildung keine Zwangskräfte auf die Lager der elektrischen Maschine ausübt.

Weiter kann vorgesehen sein, dass der Wickelkörper in eine Vergussmasse eingebettet ist. Bei der Vergussmasse kann es sich beispielsweise um einen selbsthärtenden Zweikomponenten-Kunststoff handeln, beispielsweise ein Gießharz. Es kann vorgesehen sein, den Wickelkörper in eine Gießform einzubringen und sodann die Gießform mit dem Gießharz auszugießen. Es kann aber auch vorgesehen sein, die Gießform mit einem thermoplastischen Kunststoff auszuspritzen.

In einer vorteilhaften Ausgestaltung kann vorgesehen sein, dass in die Vergussmasse magnetisch leitfähiges Material eingebracht ist. Das magnetisch leitfähige Material kann den magnetischen Fluss verbessern, ohne das Prinzip der eisenlosen Feldspule zu verletzen. Die magnetischen Partikel können zugleich als Füllmasse wirken, welche die mechanische Festigkeit der Vergussmasse erhöht.

Die Feldspulen können aus einem Wickel ausgebildet sein, der beispielsweise die Form einer Rahmenspule aufweist.

In den Wickel der Feldspule kann magnetisch leitfähiges Material eingebracht sein, beispielsweise mittels einer Folie, die eine Schicht magnetischer Partikel aufweist. Das magnetisch leitfähige Material kann den magnetischen Wirkungsgrad der stromdurchflossenen Feldspule verbessern, wie vorstehend beschrieben.

Die Feldspulen können weiter aus Wicklungsabschnitten ausgebildet sein, die elektrisch miteinander verbunden sind. Es kann also vorgesehen sein, die Feldspule abschnittsweise unterschiedlich auszubilden. Die abschnittsweise Ausbildung kann beispielsweise vorteilhaft im Hinblick auf die Montage der Feldspulen zu einem Stator- bzw. Rotorwicklungskörper sein.

Weiter können Verbindungsabschnitte vorgesehen sein, welche die Wicklungsabschnitte elektrisch miteinander verbinden.

Weiter kann vorgesehen sein, dass die Feldspulen zumindest abschnittsweise aus Flachbandmaterial ausgebildet sind.

In einer vorteilhaften Weiterbildung kann vorgesehen sein, dass es sich bei dem Flachbandmaterial um einen Folienkörper mit einer elektrisch isolierenden Trägerfolie und einer auf der Trägerfolie angeordneten elektrisch leitfähigen Schicht handelt.

Es kann vorgesehen sein, dass die Wicklungsabschnitte als Schichtverbund ausgebildet sind, wobei die elektrisch leitfähigen Schichten des Schichtverbunds mindestens an den Schmalkanten des Flachbandmaterials stoffschlüssig miteinander verbunden sind. Ein solcher Schichtverbund kann beispielsweise aus übereinander angeordneten Folienabschnitten ausgebildet sein, die wie weiter oben beschrieben, aus einer Trägerfolie mit aufgebrachter elektrisch leitfähiger Schicht ausgebildet sein können. Es kann auch vorgesehen sein, einen solchen Schichtverbund als viellagiges Flachband bereitzustellen, von dem die benötigten Wicklungsabschnitte abgetrennt werden und sodann die übereinander angeordneten elektrisch leitfähigen Schichten miteinander verbunden werden.

Weiter kann vorgesehen sein, dass auf den Verbindungsabschnitten mindestens eine Ferritperle oder dergleichen angeordnet ist. Der Begriff "Ferritperle" umfasst Körper aus magnetischer Sinterkeramik, die von den Verbindungsabschnitten durchgriffen und/oder umschlungen sein können. Es kann sich also beispielsweise um kugelförmige, lochscheibenförmige oder stabförmige Körper handeln. Geeignete stabförmige Körper können an ihren Endabschnitten Bohrungen aufweisen, um die Verbindungsabschnitte zu sichern. Die Ferritperlen wirken als Dämpfungsglieder zum Abbau von Stromschaltspitzen in den Feldspulen und darüber hinaus können sie als Funkentstörmittel wirken.

Bei der erfindungsgemäßen elektrischen Maschine kann es sich um einen Gleichstrommotor handeln, vorzugsweise um einen Radnabenmotor, oder um einen Gleichstromgenerator.

Die Lösung der Aufgabe wird durch das Prinzip erreicht, dass es sich bei der elektrischen Maschine um eine elektrische Maschine, insbesondere einen Elektromotor für Gleichstrom handelt, der aufweist: 2 Magnetringe die links und rechts an der äußersten Wand von Gehäuse parallel zur Achse angeordnet sind.

Im folgenden wird die Erfindung anhand von mehreren Ausführungsbeispielen unter Zuhilfenahme der beiliegenden Zeichnungen beispielhaft verdeutlicht.
Es zeigen
- Fig. 1: eine schematische Schnittdarstellung eines Ausführungsbeispiels der erfindungsgemäßen elektrischen Maschine;
- Fig. 2: eine schematische Schnittdarstellung der Anordnung der Feldspulen längs der Schnittlinie II-II in Fig. 1;
- Fig. 3: eine schematische Darstellung dreier benachbarter Feldspulen in Fig. 2 in perspektivischer Ansicht;
- Fig. 4a und 4b: eine schematische Darstellung eines Anordnungsbeispiels von fünf Feldspulen;
- Fig. 5a bis 5c: Fertigungsstufen einer gefalteten Feldwicklung;
- Fig. 6a: eine schematische Schnittdarstellung eines Wicklungsabschnitts einer Feldspule;
- Fig. 6b: den Wicklungsabschnitt in Fig. 6a in der Draufsicht;
- Fig. 7: eine als Rahmenspule ausgeführte Feldspule in perspektivischer Darstellung;
- Fig. 8: eine schematische Schnittdarstellung eines Ausschnitts eines Wickelkörpers;
- Fig. 9: ein Ausführungsbeispiel einer Feldspule mit Ferritkörpern;
- Fig. 10: eine schematische Schnittdarstellung einer in eine Vergussmasse eingebetteten Feldspule;
- Fig. 11: ein schematisches Schaltbild zur prinzipiellen Ankopplung einer Feldspule an ein Steuergerät für Pulsweitenmodulation;
- Fig. 12: ein schematisches Spannungs-Zeit-Diagramm der Pulsweitenmodulation;
- Fig. 13: ein schematisches Schaltbild zur prinzipiellen Ankopplung einer mehrteiligen Feldspule an ein Steuergerät für Pulsweitenmodulation;
- Fig. 14: ein schematisches Spannungs-Zeit-Diagramm der Pulsweitenmodulation in Fig. 13;
- Fig. 15: eine schematische Darstellung zur Veranschaulichung des Wirkprinzips der elektrischen Maschine in Fig. 1.

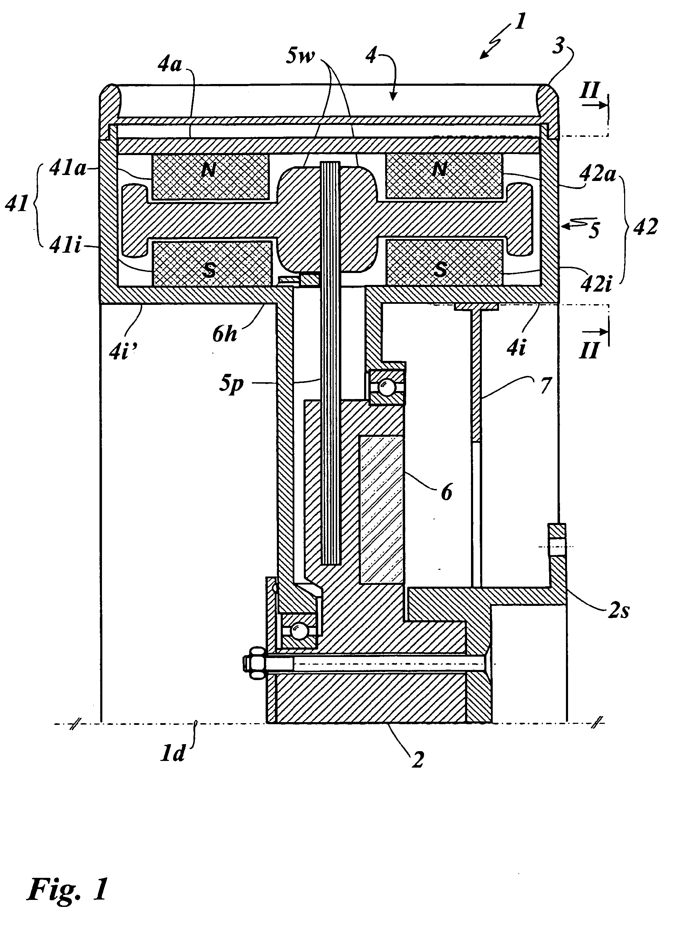

Fig. 1 zeigt eine als Radnabenmotor 1 ausgebildete elektrische Maschine. Der Abtrieb des Radnabenmotors 1 ist als eine Radfelge 3 zur Aufnahme eines Reifens ausgebildet und das Gestell des Radnabenmotors 1 ist als eine Radnabe 2 ausgebildet. Die Radnabe 2 des Radnabenmotors 1 ist auf einen Nabensitz 2s aufgenommen, der an einer in Fig. 1 nicht dargestellten Achse bzw. einen Achsstummels eines Fahrzeuges montierbar ist. Bei dem Fahrzeug kann es sich beispielsweise um ein mit Elektroenergie angetriebenes Automobil oder um ein Hybridfahrzeug handeln, das durch einen Verbrennungsmotor und einen oder mehrere Elektromotore angetrieben ist. Die Motordrehachse des Radnabenmotors 1 ist mit 1 d bezeichnet.

Der Radnabenmotor 1 ist als eisenloser Außenläufermotor aufgebaut und weist einen mit Permanentmagneten ausgebildeten Rotor 4 und einen Stator 5 auf, der mit einer Feldwicklung 5w mit eisenlosen Feldspulen 51 bis 55 ausgebildet ist. Der Rotor 4 ist drehfest mit der Radfelge 3 verbunden. Der Stator 5 ist drehfest mit der Radnabe 2 verbunden.

Der Rotor 4 und der Stator 5 sind aus zwei spiegelbildlich zueinander angeordneten im wesentlichen gleich aufgebauten Abschnitten aufgebaut, die jeder für sich einen Außenläufermotor bilden. Durch den Aufbau des Radnabenmotors 1 aus zwei spiegelbildlich zueinander angeordneten Teilmotoren werden in den Lagern des Motors statische und/oder dynamische Querkräfte vermieden, wie sie beispielsweise bei den so genannten Topfmotoren auftreten können und deshalb deren Anwendungsbereich auf kleine Abtriebsleistung beschränken.

Der Rotor 4 weist ein Rotorgehäuse mit einem Außenring 4a und einem in dem Außenring 4a angeordneten geteilten Innenring auf, der aus zwei längs der Motordrehachse hintereinander angeordneten Innenringen 4i und 4i' gebildet ist. Der Außenring 4a und die beiden Innenringe 4i, 4i' sind konzentrisch zur Motordrehachse 1d angeordnet.

Die inneren Stirnseiten der Innenringe 4i, 4i' sind auf inneren Kreisringscheiben abgestützt, die über Kugellager mit der Radnabe 2 drehbar verbunden sind und sich in Richtung der Drehachse 1d radial erstrecken. Zwischen den beiden axial beabstandeten Kreisscheiben ist ein kreiszylinderförmiger Aufnahmeraum zur Aufnahme einer weiter unten beschriebenen Statorplatine 5p ausgebildet.

Die äußeren Stirnseiten der Innenringe 4i, 4i' gehen in äußere Kreisringscheiben über, die sich in Richtung der Radfelge 3 radial erstrecken und mit der Radfelge 3 drehfest verbunden sind.

Zwischen der Innenwand des Außenrings 4a und den Außenwänden der beiden Innenringe 4i, 4i' ist ein kreisringförmiger Aufnahmeraum ausgebildet für zwei konzentrisch zur Motordrehachse 1d angeordnete Permanentmagnetringe 41, 42. Die Permanentmagnetringe weisen jeweils einen äußeren Magnetring 41 a, 42a und einen inneren Magnetring 41 i, 42i auf, wobei zwischen der Innenwand des Magnetrings 41 a bzw. 42a und der Außenwand des Magnetrings 41 i bzw. 42i jeweils ein ringförmiger Luftspalt ausgebildet ist. Die Magnetringe sind aus voneinander beabstandeten Magneten gebildet. Sowohl übereinander als auch nebeneinander angeordnete benachbarte Magnete sind so ausgerichtet, dass ungleichnamige Magnetpole einander gegenüberstehen. Der ringförmige Luftspalt ist von der Feldwicklung 5w des Stators 5 durchgriffen.

Die Feldwicklung 5w ist in dem dargestellten Ausführungsbeispiel aus n Feldspuleneinheiten gebildet, die beidseitig der Statorplatine 5p angeordnet sind und jeweils fünf Feldspulen 51 bis 55 aufweisen. Die Statorplatine 5p kann aus einem elektrisch nichtleitenden Material ausgebildet sein und nach Art einer Trägerplatine für "gedruckte Schaltungen" mit elektrischen Leiterbahnen versehen sein. Die Statorplatine 5p ist in dem dargestellten Ausführungsbeispiel als kreisringförmige Platte ausgebildet, die drehfest mit der Radnabe 2 verbunden ist.

Der Radnabenmotor 1 weist weiter eine elektronische Steuereinheit 6 auf, die in einer Ausnehmung der Radnabe 2 angeordnet ist. Die Steuereinheit 6 kann alle zum Betrieb des Radnabenmotors 1 erforderlichen elektronischen Komponenten umfassen. Es kann jedoch vorteilhafterweise vorgesehen sein, elektronische Leistungsschaltglieder zur Ansteuerung der Feldspulen, wie beispielsweise Leistungstransistoren oder Triacs, auf der Statorplatine 5p unmittelbar an den Zuleitungen der Feldspulen anzuordnen. Auf diese Weise können Leitungsverluste minimiert werden. Weiter kann vorgesehen sein, dass die elektronischen Leistungsschaltglieder ein gemeinsames Schutzgehäuse aufweisen. Es kann auch vorgesehen sein, dass nicht alle auf der Statorplatine 5p angeordneten elektronischen Leistungsschaltglieder ein gemeinsames Schutzgehäuse aufweisen, sondern dass beispielsweise die Feldspulen einer Feldspuleneinheit ein gemeinsames Schutzgehäuse aufweisen, so dass für n Feldspuleneinheiten insgesamt n Schutzgehäuse vorgesehen sind.

Ein oder mehrere auf der Statorplatine 5p im Bereich eines der inneren oder der äußeren Magnetringe 41 i, 42i, 41 a, 42a angeordnete Hallsensoren 6h sind mit der Steuereinheit 6 verbunden. Die Hallsensoren 6h sind als Lagesensoren für den Rotor 4 vorgesehen. In dem in Fig. 1 dargestellten Ausführungsbeispiel sind fünf Hallsensoren 6h vorgesehen, die mit der Steuereinheit 6 über ein Dreileiter-Bussystem verbunden sind, wobei jeder der fünf Hallsensoren 6h einer der Feldspulen 51 bis 55 einer Feldspuleneinheit zugeordnet ist. Die Steuereinheit 6 ist in dem in Fig. 1 dargestellten Ausführungsbeispiel in einer Ausnehmung der Radnabe 2 angeordnet.

Weiter weist der Radnabenmotor 1 eine Bremsscheibe 7 auf, die mit in Fig. 1 nicht dargestellten Bremsbacken zusammenwirkt. Die Bremsscheibe 7 ist im hinteren Abschnitt des Rotors 4 an der Innenwand des Rotors angeordnet. Da der Radnabenmotor 1 zum Bremsen als Generator betrieben werden kann (Motorbremse), ist die Bremsscheibe 7 vorzugsweise als Teil einer Feststellbremse oder einer Betriebsbremse bei einem Motordefekt und/oder bei Unterbrechung der Stromzuführung zum Radnabenmotor 1 oder als Teil einer Zusatzbremse vorgesehen.

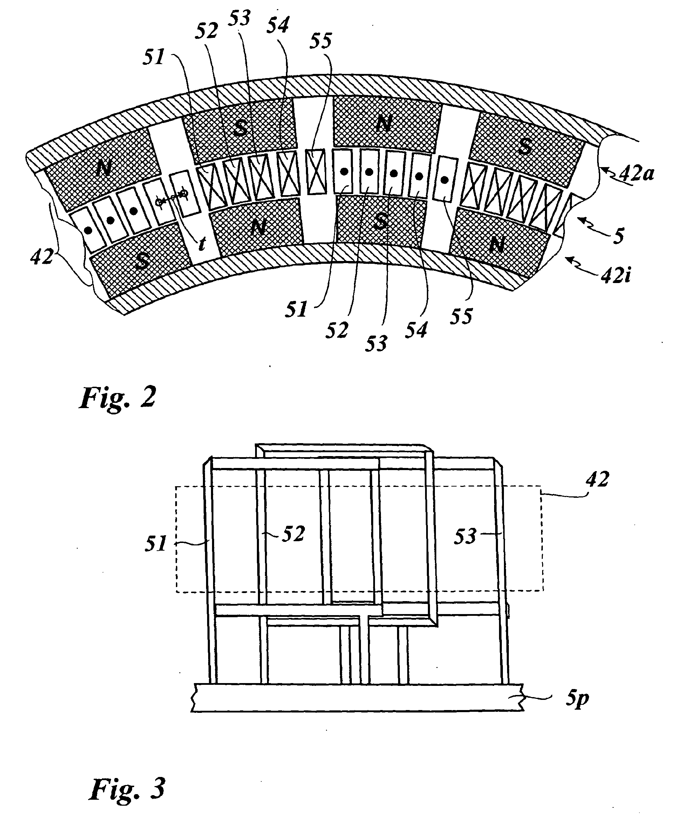

Die Fig. 2 zeigt nun die Anordnung der Feldspulen 51 bis 55 im Luftspalt des Rotors 4. In der in Fig. 2 dargestellten Rotorstellung tauchen die Feldspulen 51 bis 54 in die Luftspalte zweier benachbarter Magnetpaare ein, die aus einander gegenüberstehenden Magneten der Permanentmagnetringe 41, 42 gebildet sind; wogegen die Feldspule 55 außerhalb der beiden benachbarten Magnetpaare positioniert ist.

Die Feldspulen 51 bis 55 sind als rahmenförmige Spulen ausgeführt, deren Zuleitungen auf der Statorplatine 5p kontaktiert sind. Die Feldspulen jedes Wicklungspakets sind auf einem Kreisbogen einander teilweise überlappend angeordnet, wobei wie weiter oben beschrieben, n Feldspuleneinheiten einen Vollkreis bilden. Es können beispielsweise n = 12 Feldspuleneinheiten vorgesehen sein, so dass der Kreisbogenwinkel einer Feldspuleneinheit 360°/12 = 30° beträgt. Der Radius des Kreisbogens entspricht dem mittleren Radius des zwischen dem äußeren und dem inneren Magnetring ausgebildeten Luftspaltes. Die Wicklungen der Feldspulen umschreiben annähernd ein Rechteck oder ein Quadrat, wobei die axialen Abschnitte der Spulenwicklungen, d.h. die parallel zur Motordrehachse 1d gerichteten Abschnitte, in den besagten ringförmigen Luftspalt zwischen den Magnetringen eintauchen. Die tangentialen Abschnitte der Spulenwicklungen verlaufen außerhalb des Luftspaltes und verbinden die axialen Abschnitte so miteinander, dass der elektrische Pfad von der einen Zuleitung zu der anderen Zuleitung geschlossen ist.

Es kann vorgesehen sein, dass auf die Verbindungsleitungen und/oder die Zuleitungen der Feldspulen jeweils mindestens eine Ferritperle gefädelt ist. Der durch die Ferritperlen hervorgerufene induktive Widerstand sorgt für die Glättung von Impulsspitzen und kann den elektrischen Wirkungsgrad des Radnabenmotors 1 verbessern.

Wie in Fig. 2 gezeigt, ist der Stromfluss in den beiden axialen Abschnitten der Feldspulenwicklung entgegengesetzt gerichtet. In Fig. 2 ist der in die Zeichenebene gerichtete Stromfluss mit einem Kreuz und der aus der Zeichenebene gerichtete Stromfluss durch einen Punkt bezeichnet. Weil zugleich der Magnetfluss zweier benachbarter Magnetpaare unterschiedlich gerichtet ist, wirken die von den axialen Abschnitte der Feldspulenwicklungen ausgeübten Abstoßungskräfte in gleicher Richtung.

In der in Fig. 2 dargestellten Drehlage des Rotors 4 vermag die Feldspule 55 keine Abstoßungskraft auf den Rotor 4 auszuüben, weil sie außerhalb des Luftspaltes steht. Deshalb kann der Stromfluss durch die Feldspule 55 verringert oder unterbrochen werden, bis die Feldspule 55 wieder in den Luftspalt eintaucht. Auf diese Weise kann die mittlere Stromaufnahme des Radnabenmotors 1 bei gleicher mechanischer Leistung verringert sein. Zur exakten Lagebestimmung des Rotors 4 sind die weiter oben beschriebenen Hallsensoren 6h vorgesehen.

Wie in Fig. 2 gezeigt, sind die in den Luftspalt eintauchenden aktiven Abschnitte der Feldspulen mit gleichem Teilungsabstand t angeordnet. Bei dem Teilungsabstand handelt es sich nicht um den Abstand zwischen aktiven Abschnitten zweier benachbarter Feldspulen, beispielsweise der Hinterkante des einen Abschnitts und der Vorderkante des anderen Abschnitts, sondern um den Abstand analoger Strecken bzw. Punkte der Abschnitte, beispielsweise um den Abstand der Vorderkante des einen Abschnitts zu der Vorderkante des anderen Abschnitts oder um den Abstand der Mittelpunkte der beiden Abschnitte. Der Teilungsabstand kann durch den Abstand auf der Mantelfläche des durch die Feldspulen gebildeten Hohlzylinders bestimmt sein oder durch einen Winkelabstand, wobei der Scheitelpunkt des Teilungswinkels mit der Drehachse des Rotors zusammenfällt. Die beiden aktiven Wicklungsabschnitte der Feldspulen haben den Abstand A = m • t, wobei t den Teilungsabstand der m Feldspulen bezeichnet.

Die Fig. 3 zeigt nun den prinzipiellen Aufbau der Feldspulen 51 bis 55, wobei der besseren Übersichtlichkeit wegen nur die ersten drei Feldspulen 51 bis 53 der Feldspuleneinheit dargestellt sind.

Damit die Feldspulen ohne gegenseitige Behinderung montierbar sind, ist vorgesehen, die Feldspulen als Rahmenspulen auszubilden und gegebenenfalls durch Faltung der Wicklung axiale und tangentiale Abschnitte um 90° gegeneinander zu verschwenken, so dass Kollisionen benachbarter Feldspulen vermieden sind. In Fig. 3 sind die tangentialen Abschnitte der drei Feldspulen 51 bis 53 U-förmig zueinander angeordnet, so dass die tangentialen Abschnitte der Feldspule 51 über der Feldspule 52 verlaufen und die tangentialen Abschnitte der Feldspule 53 unter der Feldspule 52 verlaufen. Die axialen Abschnitte der Feldspulen sind ohne Tiefenversatz angeordnet (siehe Fig. 2).

Die mittlere Feldspule 52 ist kastenförmig ausgebildet, d.h. keiner der Abschnitte der Spulenwicklung ist gegen einen anderen gefaltet.

Bei der über der Feldspule 52 angeordneten Feldspule 51 sind die beiden tangentialen Abschnitte gegenüber den axialen Abschnitten gefaltet, so dass die tangentialen Abschnitte der Feldspule 51 in der Quererstreckung mit den korrespondierenden tangentialen Abschnitten der Feldspule 52 einen Winkel von 90° bilden.

In analoger Weise sind die tangentialen Abschnitte der unter der Feldspule 52 angeordneten Feldspule 53 gefaltet und bilden in der Quererstreckung mit den korrespondierenden tangentialen Abschnitten der Feldspule 52 einen Winkel von - 90°.

Infolge der vorzugsweise vorgesehenen Ausbildung der Feldspulen 51 bis 55 als Flachspulen kann die Spulenwicklung auch aus Bandmaterial ausgebildet sein, beispielsweise aus einer elektrisch isolierenden Trägerfolie und einer auf der Trägerfolie aufgebrachten elektrisch leitfähigen Schicht. Das kann besonders vorteilhaft sein, um die Dicke der elektrisch leitfähigen Schicht dem Skin-Effekt entsprechend zu optimieren. Als Skin-Effekt wird der Effekt bezeichnet, dass ein Wechselstrom nur in oberflächennahen Schichten eines elektrischen Leiters transportiert wird. Die Eindringtiefe des Stromes ist umso geringer, je höher die Frequenz ist. Weil es sich bei der Betriebsspannung des Radnabenmotors 1 um eine impulsförmige Gleichspannung handelt, ist der Skin-Effekt an den Feldspulen zu beobachten. Es kann also vorgesehen sein, den Stromtransport auf viele übereinander liegende dünne elektrisch leitende Schichten aufzuteilen. Dünne Schichten können auch aus elektrischen Leitungsmaterialien ausgeformt werden, die in Drahtform nicht oder nur sehr schlecht zu Wicklungen mit kleinem Wickelradius formbar sind, wie er an den vorstehend beschriebenen Faltungen auftritt.

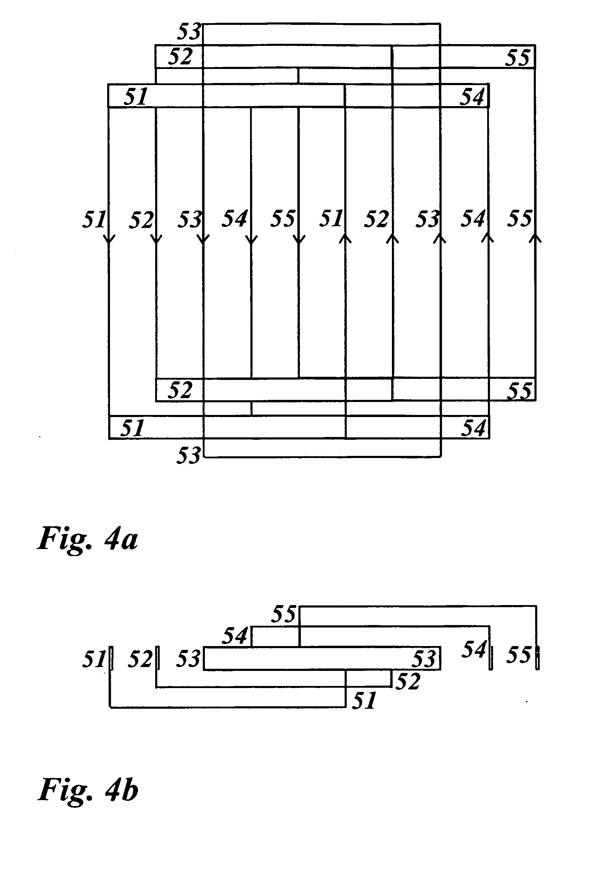

Die Fig. 4a und 4b zeigen nun den Wicklungsaufbau für Feldspuleneinheiten mit fünf Feldspulen in einer gegenüber Fig. 3 schematisierten Darstellung.

Fig. 4a zeigt die Feldspuleneinheit in der Draufsicht, wobei die Zuleitungen zu den Feldspulen nicht dargestellt sind, Fig. 4b in der Seitenansicht. In der aus den übereinander angeordneten Feldspulen 51 bis 55 bestehenden Feldspuleneinheit ist die Feldspule 53 die mittlere Feldspule. Über der mittleren Feldspule 53 sind die Feldspulen 51 und 52 und unter der Feldspule 53 sind die Feldspulen 54 und 55 angeordnet.

Zur kollisionsfreien Anordnung der fünf Feldspulen kann vorgesehen sein, dass die mittlere Feldspule 53 eine so große axiale Erstreckung hat, dass die mit kleinerer axialer Erstreckung ausgebildeten übrigen Feldspulen tiefenversetzt innerhalb der axialen Erstreckung der Feldspule 53 angeordnet sind. Durch die Tiefenstaffelung benachbarter Feldspulen 51, 52 bzw. 54, 55 und das Umfalten der tangentialen Abschnitte dieser Feldspulen um 90° bzw. - 90° können die Feldspulen 51 bis 55 kollisionsfrei zu der bezeichneten Feldspuleneinheit (siehe Fig. 2) zusammengefügt werden.

Das hier beschriebene Prinzip kann auf alle Feldspuleneinheiten mit ungerader Anzahl der Feldspulen angewendet werden. Es ist auch auf Feldspuleneinheiten mit gerader Anzahl der Feldspulen anwendbar, indem eine in der Höhenerstreckung asymmetrische Feldspuleneinheit vorgesehen ist, bei der die Feldspule mit der größten axialen Erstreckung um einen Platz aus der mittleren Position nach oben oder unten versetzt angeordnet ist.

Fig. 4b zeigt in der Seitenansicht, dass die in den ringförmigen Luftspalt zwischen zwei koaxial angeordneten Rotorringen eintauchenden radialen Abschnitte der Feldspulen 51 bis 55 kollisionsfrei nebeneinander angeordnet sind.

Wie in Fig. 1 schematisch dargestellt, können die Feldspulen vergossen sein und so einen kompakten, mechanisch stabilen und vor äußeren Einflüssen geschützten Aufbau bilden. Bei der Vergussmasse kann es sich um einen gießfähigen Kunststoff handeln, beispielsweise um ein Epoxydharz. Es kann vorgesehen sein, dass alle Feldspulen miteinander vergossen sind oder dass die Feldspulen abschnittsweise miteinander vergossen sind, beispielsweise die Feldspulen einer Feldspuleneinheit miteinander vergossen sind. Die Vergussmasse kann stoffschlüssig und/oder formschlüssig mit der Statorplatine 5p verbunden sein.

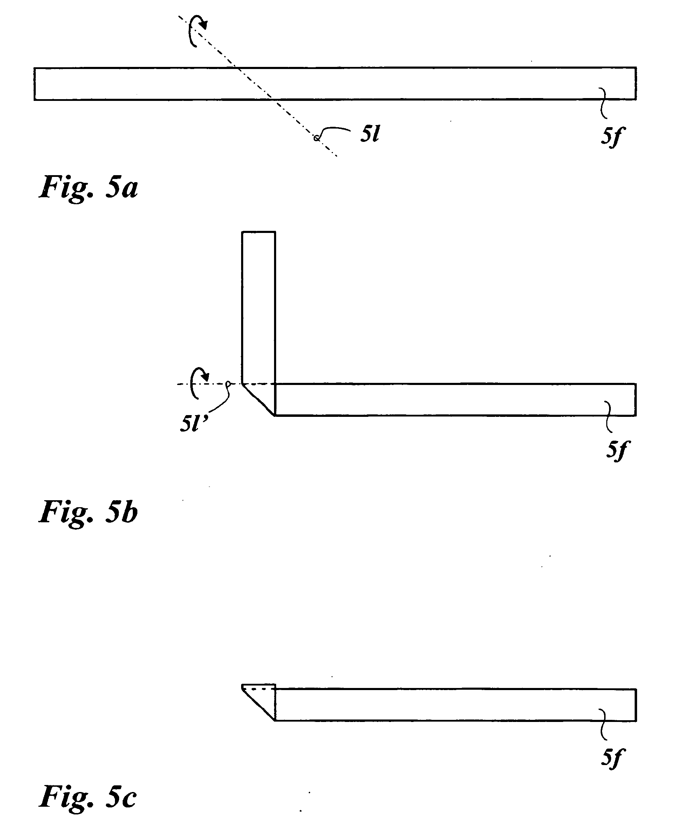

Die Fig. 5a bis 5c zeigen nun im einzelnen die Verfahrensschritte beim Falten der Feldspulen 51 bis 55.

Ein Flachbandstreifen 5f wird zunächst um eine um 45° zur Längsachse des Flachbandstreifens geneigte erste Faltlinie 5l gefaltet, so dass der Flachbandstreifen 5f in Fig. 5b nunmehr zwei Abschnitte aufweist, die einen Winkel von 90° einschließen. Die beiden durch das Falten erzeugten Abschnitte des Flachbandstreifens liegen in einer gemeinsamen Ebene.

Die Innenkante des nunmehr L-förmigen Flachbandstreifens 5f bildet eine zweite Faltlinie 5l' (siehe Fig. 5b), um welche der im Winkel aufgefaltete Abschnitt des Flachbandstreifens 5f um 90° nach hinten gefaltet wird, so dass die beiden Abschnitte des Flachbandstreifens nunmehr in zwei senkrecht aufeinander stehenden Ebenen angeordnet sind. Durch weiteres Falten kann auf diese Weise eine gefaltete Rahmenspule erzeugt werden, wie weiter oben in Fig. 3 dargestellt.

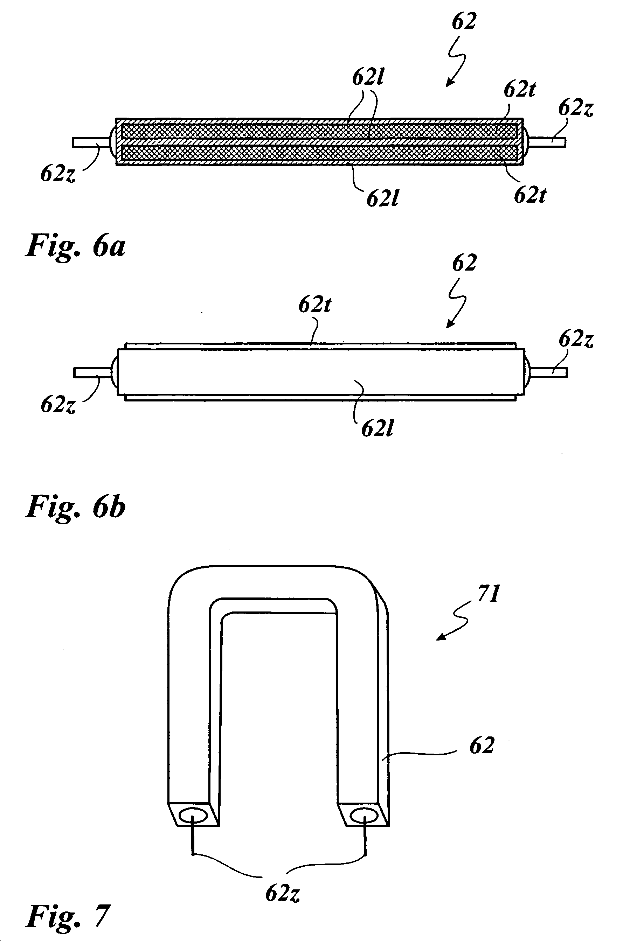

Die Fig. 6a und 6b zeigen nun den Aufbau eines Wicklungsabschnitts 62, der für eine Feldspule vorgesehen ist, die zwei mit einem Verbindungsabschnitt verbundene parallel angeordnete Wicklungsabschnitte aufweist. Die Wicklungsabschnitte 62 sind vorgesehen, in den ringförmigen Luftspalt zwischen den Magnetringen einzutauchen, während der Verbindungsabschnitt außerhalb des Luftspalts verlaufen kann.

Der Wicklungsabschnitt 62 ist als ein Folienkörper aus übereinander angeordneten Schichten ausgebildet. Auf elektrisch isolierenden Trägerfolien 62t sind elektrisch leitende Schichten 62l angeordnet, wobei Trägerfolien 62t und elektrisch leitende Schichten 62l alternierend angeordnet sind. Die beiden äußeren Schichten des Folienkörpers sind als elektrisch leitende Schichten 62l ausgebildet. In dem in Fig. 6a, 6b dargestellten Ausführungsbeispiel sind zwecks übersichtlicher Darstellung nur zwei Schichtfolgen vorgesehen. Der Folienkörper kann jedoch mehr Schichtfolgen aufweisen, beispielsweise 10 Schichtfolgen, also insgesamt (2 • 10) + 1 Schichten aufweisen. Die elektrisch leitenden Schichten 62l sind an den Schmalseiten des Wicklungsabschnitts 62 miteinander verbunden und mit einer gemeinsamen Zuleitung 62z kontaktiert.

Wie in der Draufsicht in Fig. 6b zu erkennen ist, weisen die elektrisch leitenden Schichten 62l eine geringere Breite, jedoch eine größere Länge auf als die Trägerfolien 62t.

Fig. 7 zeigt nun ein Anwendungsbeispiel für den Wicklungsabschnitt 62 in Fig. 6a, 6b. Bei einer U-förmigen Feldspule 71 sind die in den Luftspalt eintauchenden Wicklungsabschnitte sowie der Verbindungsabschnitt einstückig ausgebildet. Die Stirnseiten der U-Schenkel der Feldspule 71 sind mit den Zuleitungen 62z verbunden.

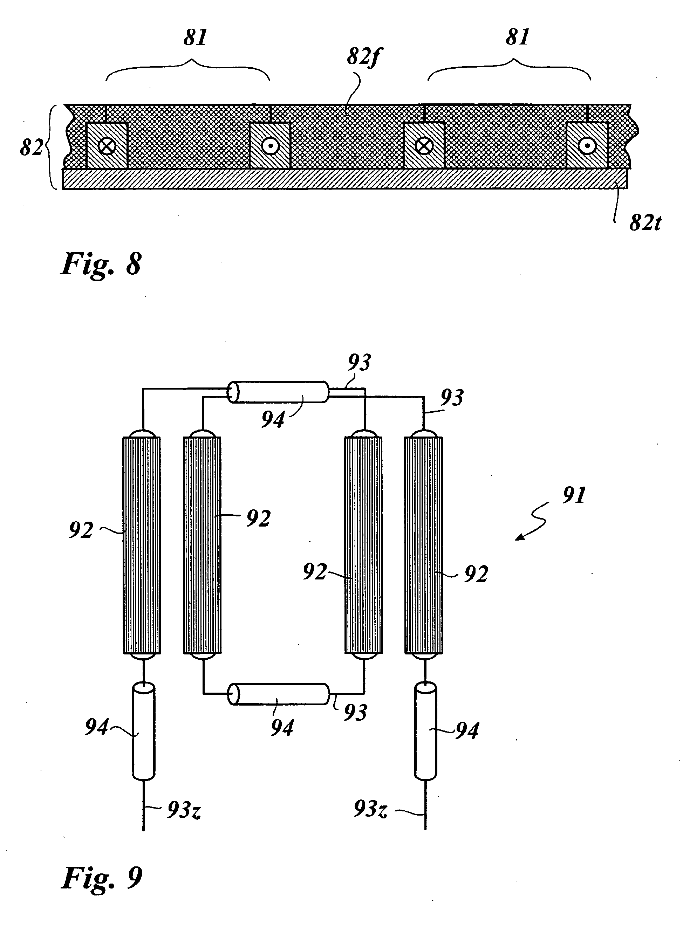

Fig. 8 zeigt nun einen Wicklungskörper 82 mit Feldspulen 81, die formschlüssig im Wicklungskörper 82 eingebettet sind. Der Wicklungskörper 82 weist eine Trägerplatte 82t auf, auf der die Feldspulen 81 nebeneinander angeordnet sind und durch Formkörper 82f fixiert sind. Die Formkörper 82f sind durch eine nicht dargestellte Kleberschicht auf der Trägerplatte 82t fixiert. Die Trägerplatte 82t ist als Zylindermantel ausgebildet, wobei die Zylinderachse mit der Drehachse der elektrischen Maschine zusammenfällt. Die Schnittebene der Darstellung in Fig. 8 steht senkrecht auf der besagten Drehachse. Zwischen zwei benachbarten Formkörpern 82f ist ein Aufnahmeraum ausgebildet, dessen Querschnitt dem Querschnitt der Wicklung der Feldspule 81 entspricht. Der Aufnahmeraum ist nach unten hin zur Trägerplatte 82t geöffnet und im montierten Zustand durch die Trägerplatte 82t verschlossen.

Fig. 9 zeigt nun eine Feldspule 91, die aus vier Wicklungsabschnitten 92 aufgebaut ist. Die Wicklungsabschnitte 92 sind in Reihe geschaltet und durch Verbindungsabschnitte 93 miteinander verbunden. Die Verbindungsabschnitte 93 sowie Zuleitungen 93z durchgreifen rohrförmige Ferritkörper 94. Die Ferritkörper 94 bilden zusammen mit den Verbindungsabschnitten 93 bzw. den Zuleitungen 93z Induktivitäten, die Stromänderungen in der Feldspule 91 entgegenwirken und so Stromspitzen abbauen. Daraus kann ein weicherer Lauf der elektrischen Maschine folgen.

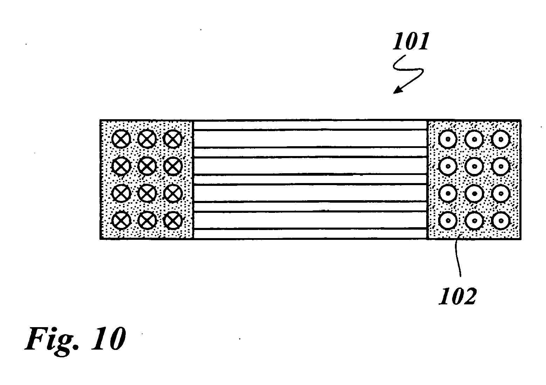

Die Fig. 10 zeigt nun eine Feldspule 101 im Schnitt, deren Wicklungen in eine Vergussmasse 102 eingebettet sind und auf diese Weise mechanisch fixiert sind. Bei der Vergussmasse 102 kann es sich beispielsweise um ein gießfähiges Epoxidharz handeln. Die Vergussmasse 102 ist mit Magnetpartikeln versetzt, die durch die Vergussmasse 102 voneinander elektrisch isoliert sind. Dadurch konzentrieren die magnetischen Partikel zwar den magnetischen Fluss, doch es werden keine Wirbelströme gebildet.

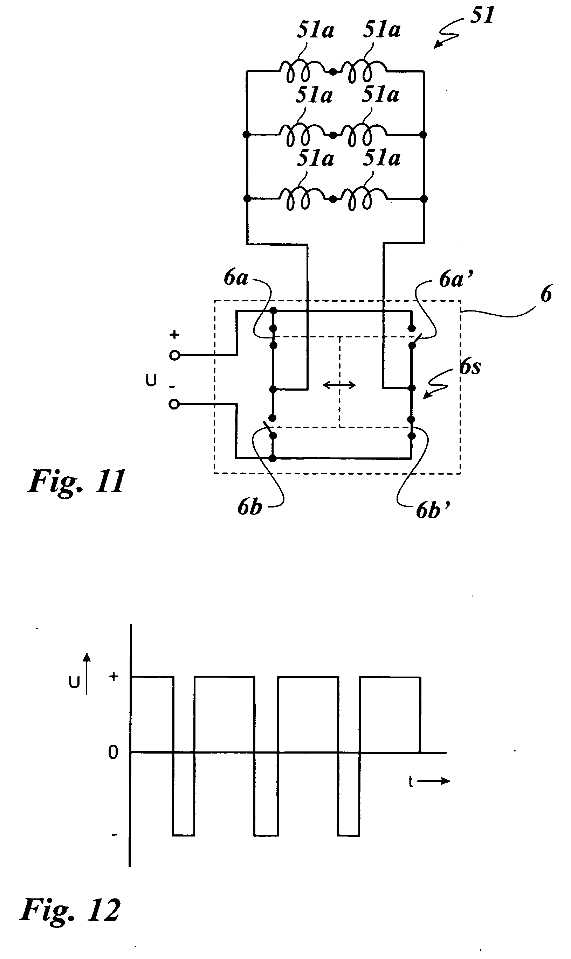

Die Fig. 11 und 12 zeigen nun den prinzipiellen Aufbau und die prinzipielle Wirkungsweise einer für den Betrieb des Radnabenmotors 1 vorgesehenen Pulsweitensteuerung. Ein Schaltmodul 6s weist in dem in Fig. 11 dargestellten Ausführungsbeispiel vier Ein-Aus-Schalter 6a, 6b, 6a' und 6b' auf, wobei die Schalter 6a und 6a' sowie 6b und 6b' einen Wechselschalter bilden. Die Schalter können beispielsweise als elektronische Schalter, wie Transistoren oder Triacs ausgebildet sein und elektronisch angesteuert werden. Dabei können die vier Schalter 6a bis 6b' des Schaltmoduls 6s unmittelbar an den Anschlüssen der Feldspulen auf der Statorplatine 5p angeordnet sein, wogegen die Schaltung zur Ansteuerung der Schalter 6a bis 6b' in die elektronische Steuereinheit 6 integriert sein kann. Die vier Schalter 6a bis 6b' sind in einer Brückenschaltung angeordnet und bilden so einen zweipoligen Umschalter, dessen Eingang mit einer Gleichspannungsquelle mit der Betriebsspannung U verbunden ist und dessen Ausgang mit der Feldspule verbunden ist. In dem in Fig. 11 dargestellten Ausführungsbeispiel handelt es sich um die Feldspule 51, die 6 miteinander verbundene Wicklungsabschnitte 51 a aufweist. Jeweils zwei Wicklungsabschnitte 51a sind in Reihe geschaltet, wobei die durch Reihenschaltung miteinander verbundenen Abschnitte parallel geschaltet sind. Die Wicklungsabschnitte können beispielsweise durch Verschweißen miteinander verbunden sein. Das Parallelschalten von Wicklungsabschnitten kann, wie weiter oben ausgeführt, wegen des Skin-Effekts vorgesehen sein.

Wenn, wie in Fig. 11 gezeigt, zunächst die beiden Schalter 6a und 6b' geschlossen sind und die beiden Schalter 6a' und 6b geöffnet sind, ist der Stromfluss vom Pluspol der Gleichspannungsquelle über den Schalter 6a, die Feldwicklung 51 und den Schalter 6b` zum Minuspol der Gleichspannungsquelle gerichtet. Nach dem Umschalten ist der Stromfluss vom Minuspol der Gleichspannungsquelle über den Schalter 6b, die Feldwicklung 51 und den Schalter 6a' zum Pluspol der Gleichspannungsquelle gerichtet, d.h. der Stromfluss durch die Feldwicklung 51 ist umgekehrt.

Wie das Spannungs-Zeit-Diagramm in Fig. 12 zeigt, kann der Spannungsverlauf am Ausgang des Schaltmoduls 6s als Pulsfolge positiver und negativer Impulse dargestellt werden. Durch Variation der Pulsweite, d.h. der Zeitdauer der positiven und negativen Impulse, kann die Drehrichtung und die Umdrehungszahl des Radnabenmotors 1 eingestellt werden.

In dem in Fig. 12 dargestellten Ausführungsbeispiel weisen die positiven Impulse eine größere Pulsweite auf als die negativen Impulse, wobei die negativen Impulse der eingenommenen Drehbewegung entgegenwirken, so dass der Radnabenmotor nicht die maximale Drehzahl erreicht. Durch weiteres Verkleinern der Pulsweite der negativen Impulse kann die Drehzahl des Radnabenmotors erhöht werden. Durch Vergrößern der Pulsweite der negativen Impulse kann die Drehzahl des Radnabenmotors bis zum Stillstand verringert werden. Der Motor kommt zum Stillstand, wenn die Pulsweite der negativen und der positiven Impulse gleich ist oder wenn die Stromzufuhr unterbrochen ist. Das "Rütteln" des Motors bei Stillstand oder bei kleinen Drehzahlen kann für den Langsamlauf von Vorteil sein, da auf diese Weise die bremsende Wirkung von Lagerreibungen reduziert wird. Durch weiteres Vergrößern der Pulsweiten der negativen Impulse und/oder Verkleinern der Pulsweiten der positiven Impulse kann die Drehrichtung des Radnabenmotors 1 umgekehrt werden. Es kann also vorgesehen sein, durch die Steuerung des Impulsverhältnisses, d.h. des Verhältnisses der Pulsweite der positiven Impulse zu den negativen Impulsen oder umgekehrt die Drehzahl des Radnabenmotors 1 zu steuern.

Es kann aber auch vorgesehen sein, den Motor nur durch positive oder durch negative Impulse zu steuern. In diesem Falle bestimmt das Verhältnis zwischen der Pulsdauer und der Pausenzeit zwischen zwei Impulsen die Drehzahl des Radnabenmotors 1.

Die Feldspulen eines Wicklungspakets werden nun zeitlich aufeinander folgend so angesteuert, dass ein Drehfeld erzeugt wird, welches den Rotor 4 in Drehung versetzt. Dabei erzeugen die rotierenden Permanentmagneten des Rotors 4 in den Hallsensoren 6h Signalspannungen, die durch die Steuereinheit 6 ausgewertet werden und die aktuelle Drehlage des Rotors 4 bestimmen. Zur Motorsteuerung ist also kein Kommutator benötigt. Es handelt sich bei dem erfindungsgemäßen Radnabenmotor 1 um einen kommutatorlosen Gleichstrommotor, der wegen seines einfachen Aufbaus und der gewichtssparenden kernlosen Ausbildung der Feldspulen einen vorteilhaften Direktantrieb für Fahrzeugräder bilden kann.

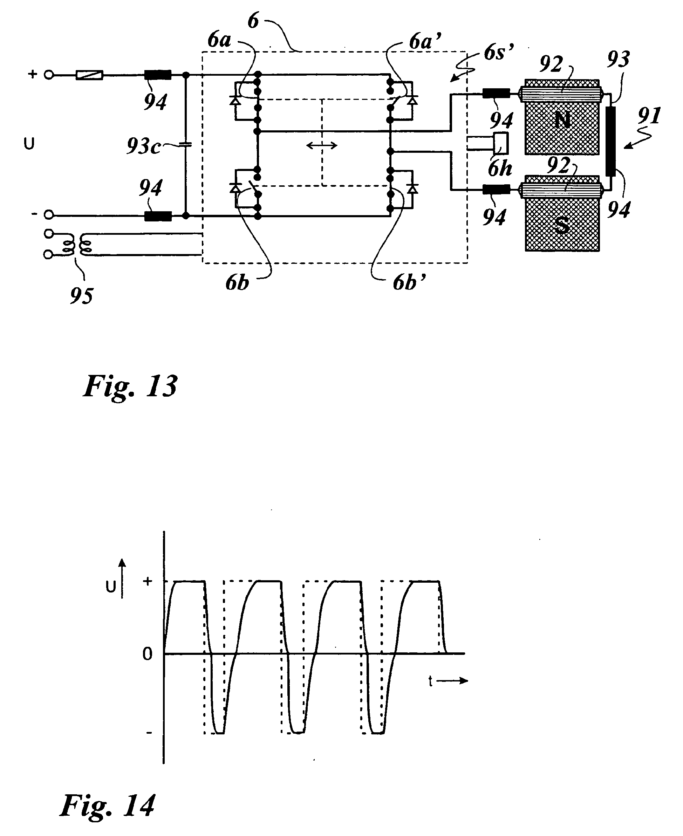

Fig. 13 zeigt nun ein Schaltmodul 6s', bei dem die Schalter 6a bis 6b' jeweils durch eine Diode überbrückt sind. Eine Feldspule 91 weist zwei Wicklungsabschnitte 92 auf, die in dem in Fig. 13 dargestellten Ausführungsbeispiel als ein mehrlagiges Wicklungspaket ausgebildet sind. Die elektrisch leitenden Schichten des Wicklungspakets sind durch Isolierschichten voneinander isoliert. Die Wicklungsabschnitte 92 sind durch einen Verbindungsabschnitte miteinander verbunden. Den Verbindungsabschnitt sowie die Zuleitungen der Feldspule 91 durchgreifen rohrförmige Ferritkörper 94. Die Ferritkörper 94 bilden zusammen mit dem Verbindungsabschnitt bzw. den Zuleitungen Induktivitäten, die Stromänderungen in der Feldspule 91 entgegenwirken und so Stromspitzen abbauen. Daraus kann ein weicherer Lauf der elektrischen Maschine folgen. Weitere rohrförmige Ferritkörper 94 umgreifen die mit der Gleichspannungsquelle verbundenen Zuleitungen der Steuereinheit 6. Direkt am Stromversorgungs-Eingang der Steuereinheit 6 ist ein Kondensator 93 angeordnet, der die beiden Stromzuleitungen zur Steuereinheit überbrückt. Er hat die Aufgabe, Rücklaufspannungen zu puffern, die immer dann entstehen, wenn die Pulsrichtung wechselt. Der Kondensator 93 kann auf der Statorplatine 5p angeordnet sein. Zur Ansteuerung der Steuereinheit 6 ist eine induktive Ankopplung 95 vorgesehen.

Fig. 14 zeigt das durch die Ferritkörper 94 in Fig. 13 geprägte Spannungs-Zeit-Diagramm der Pulsweitensteuerung. In Fig. 14 ist zum Vergleich das Spannungs-Zeit-Diagramm in Fig. 12 mit gestrichelten Linien eingezeichnet, das durch rechteckförmige Impulse gekennzeichnet ist. Demgegenüber sind in Fig. 14 die ehemals senkrechten Impulsflanken verformt, weil die Ferritkörper 94 als Dämpfungsglieder wirken, wie in Fig. 13 beschrieben. Die Impulsflanken sind nun geneigt mit kurvenförmigem Verlauf.

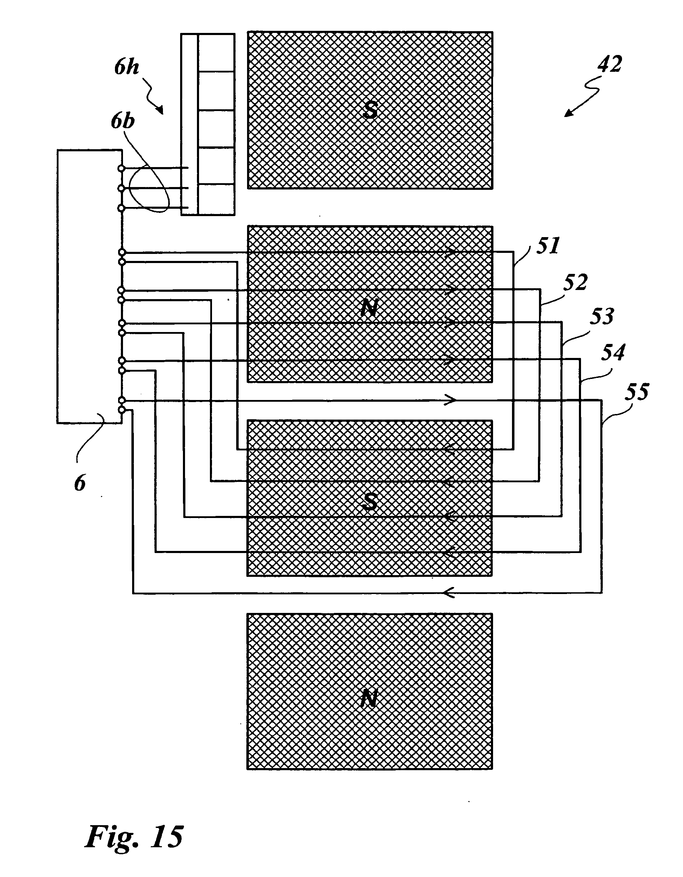

Fig. 15 zeigt nun eine schematische Darstellung zur Veranschaulichung des Wirkprinzips des Radnabenmotors 1. Die elektronische Steuereinheit 6 ist mit den Feldspulen 51 bis 55 verbunden, die so einander überlappend angeordnet sind, dass Wicklungsabschnitte mit gleicher Stromrichtung jeweils eine aufsteigende Reihe bilden (siehe auch Fig. 2). Jede der Feldspulen 51 bis 55 wirkt mit zwei Magnetpaaren zusammen, die nebeneinander angeordnet sind.

In Fig. 15 sind jeweils die unteren Magnete der Magnetpaare dargestellt, die den Magnetring 42 bilden. In der in Fig. 9 dargestellten Drehlage sind die Wicklungsabschnitte der Feldspulen 51 bis 54 in den Luftspalt zwischen den Magnetringen 41 und 42 eingetaucht; die Feldspule 55 ist außer Eingriff. Die Steuereinheit 6 speist in die Feldspulen 51 bis 54 pulsierenden Gleichstrom ein, wodurch um die in den Luftspalt eingetauchten Wicklungsabschnitte Magnetfelder ausgebildet sind, welche die Magnetringe 41 und 42 in Drehung versetzen.

Die fünf Hallsensoren 6h sind durch ein dreiadriges Datenbussystem 6b mit der Steuereinheit 6 verbunden. Sie sind im gleichen Abstand wie die Feldspulen angeordnet, so dass die Ausgangssignale der Hallsensoren eine Lageinformation für die Feldspulen 51 bis 55 bilden, die jeweils n-mal am Umfang des Rotors des Radnabenmotors angeordnet sind. Die Steuereinheit ist mit fünf Endstufen für Pulsweitenmodulation ausgebildet, wie in Fig. 11 bzw. Fig. 13 sowie in Fig. 15 dargestellt. Es können auch 2 x 5 Endstufen vorgesehen sein, um die beiden Teilmotoren 41 bzw. 42 (siehe Fig. 1) unabhängig voneinander ansteuern zu können, so dass bei Ausfall des einen Teilmotors der andere Teilmotor funktionsfähig bleibt.

Die Feldspule 55, die sich in der in Fig. 15 dargestellten Drehlage des Rotors nicht in dem Luftspalt zwischen den Magnetringen 41 und 42 befindet, leistet keinen Beitrag zur Drehung des Rotors und ist daher durch die Steuereinheit 6 stromlos geschaltet.

## Patentansprüche

1. Elektrische Maschine mit einem Rotor (4) und einem Stator (5), aufweisend mit einer Steuereinheit (6) verbundene eisenlose Feldspulen (51 bis 55) und Permanentmagnetringe (41, 42) mit einem ringförmigen Luftspalt,
**dadurch gekennzeichnet,**
**dass** die elektrische Maschine aus zwei gleichartigen Teilmaschinen aufgebaut ist, wobei Wickelkörper (5w) beider Maschinen einander zugewandt auf einer Trägerplatine (5p) angeordnet sind, und dass zumindest ein Teil der Steuereinheit (6) unmittelbar an den Feldspulen (51 bis 55) angeordnet ist.

2. Elektrische Maschine nach einem der vorangehenden Ansprüche,
**dadurch gekennzeichnet,**
**dass** es sich bei der Steuereinheit (6) um eine Steuereinheit für Pulsweitenmodulation handelt.

3. Elektrische Maschine nach einem der vorangehenden Ansprüche,
**dadurch gekennzeichnet,**
**dass** elektronische Leistungsschaltglieder der Steuereinheit (6) auf einem gemeinsamen Trägersubstrat angeordnet sind.

4. Elektrische Maschine nach Anspruch 3,
**dadurch gekennzeichnet,**
**dass** mehrere elektronische Leistungsschaltglieder eine gemeinsame Schutzkapselung aufweisen.

5. Elektrische Maschine nach einem der vorangehenden Ansprüche,
**dadurch gekennzeichnet,**
**dass** zur Drehlagebestimmung des Rotors (4) Hallsensoren (6h) vorgesehen sind.

6. Elektrische Maschine nach einem der vorangehenden Ansprüche,
**dadurch gekennzeichnet,**
**dass** jeder der Permanentmagnetringe (41, 42) aus 2 • n Magnetpaaren ausgebildet ist und pro Permanentmagnetring (41, 42) m • n Feldspulen vorgesehen sind, die n Feldspuleneinheiten bilden, die abschnittsweise in den ringförmigen Luftspalt eintauchen.

7. Elektrische Maschine nach Anspruch 6,
**dadurch gekennzeichnet,**
**dass** die Anzahl m der Feldspulen (51 bis 55) einer Feldspuleneinheit m ≥ 1 ist, vorzugsweise dass m = 3 bis 5 ist.

8. Elektrische Maschine nach Anspruch 6 oder 7,
**dadurch gekennzeichnet,**
**dass** jeweils die erste bis m-te der m Feldspulen (51 bis 55) einer Feldspuleneinheit eine voneinander unabhängig steuerbare Feldspulengruppe bilden, die mit jeweils einer von m Endstufen der Steuereinheit verbunden ist.

9. Elektrische Maschine nach einem der Ansprüche 6 bis 8,
**dadurch gekennzeichnet,**
**dass** die m Feldspulen (51 bis 55) mit teilweiser Überlappung angeordnet sind.

10. Elektrische Maschine nach einem der Ansprüche 6 bis 9,
**dadurch gekennzeichnet,**
**dass** die magnetischen Feldlinien des Magnetpaars radial gerichtet sind.

11. Elektrische Maschine nach einem der Ansprüche 6 bis 10,
**dadurch gekennzeichnet,**
**dass** zwei aufeinanderfolgende Magnetpaare mit entgegengesetzter magnetischer Flussrichtung ausgebildet sind.

12. Elektrische Maschine nach einem der Ansprüche 6 bis 11,
**dadurch gekennzeichnet,**
**dass** zwei aufeinanderfolgende Magnetpaare mit Abstand zueinander angeordnet sind.

13. Elektrische Maschine nach einem der vorangehenden Ansprüche,
**dadurch gekennzeichnet,**
**dass** die Feldspule (51 bis 55) stromlos geschaltet ist, wenn der Rotor (4) eine Drehlage einnimmt, bei der die in den Luftspalt des Permanentmagnetrings (41, 42) eintauchenden Abschnitte der Feldspule (51 bis 55) sich außerhalb des Luftspalts befinden.

14. Elektrische Maschine nach einem der vorangehenden Ansprüche,
**dadurch gekennzeichnet,**
**dass** die Feldspulen (51 bis 55) einen freitragenden vorzugsweise topfförmigen Wickelkörper (5w) bilden.

15. Elektrische Maschine nach Anspruch 14,
**dadurch gekennzeichnet,**
**dass** der Wickelkörper (5w) in eine Vergussmasse eingebettet ist.

16. Elektrische Maschine nach einem der vorangehenden Abschnitte,
**dadurch gekennzeichnet,**
**dass** die Feldspulen (51 bis 55) zumindest abschnittsweise aus Flachbandmaterial ausgebildet sind.

17. Elektrische Maschine nach Anspruch 16,
**dadurch gekennzeichnet,**
**dass** es sich bei dem Flachbandmaterial um einen Folienkörper mit einer elektrisch isolierenden Trägerfolie und einer auf der Trägerfolie angeordneten elektrisch leitfähigen Schicht handelt.

## Claims

1. Electrical machine having a rotor (4) and a stator (5), having ironless field coils (51 to 55) which are connected to a control unit (6), and having permanent magnet rings (41, 42) with an annular air gap,
**characterized**
**in that** the electrical machine is formed from two machine elements of the same type, wherein winding formers (5w) of both machines are arranged facing one another on a mounting board (5p), and
**in that** at least a part of the control unit (6) is arranged directly adjacent to the field coils (51 to 55).

2. Electrical machine according to one of the preceding claims,
**characterized**
**in that** the control unit (6) is a control unit for pulse-width modulation.

3. Electrical machine according to one of the preceding claims,
**characterized**
**in that** electronic power switching elements of the control unit (6) are arranged on a common mounting substrate.

4. Electrical machine according to Claim 3,
**characterized**
**in that** a plurality of electronic power switching elements have a common protective encapsulation.

5. Electrical machine according to one of the preceding claims,
**characterized**
**in that** Hall sensors (6h) are provided in order to determine the rotation position of the rotor (4).

6. Electrical machine according to one of the preceding claims,
**characterized**
**in that** each of the permanent magnet rings (41, 42) is formed from 2·n magnet pairs, and m·n field coils are provided for each permanent magnet ring (41, 42) and form n field coil units, which enter the annular air gap in places.

7. Electrical machine according to Claim 6,
**characterized**
**in that** the number m of field coils (51 to 55) of a field coil unit is m ≥ 1, preferably in that m = 3 to 5.

8. Electrical machine according to Claim 6 or 7,
**characterized**
**in that** the first to the m-th of the m field coils (51 to 55) of a field coil unit each form a field coil group, which field coil groups can be controlled independently of one another and are each connected to in each case one of the m output stages of the control unit.

9. Electrical machine according to one of Claims 6 to 8,
**characterized**
**in that** the m field coils (51 to 55) are arranged partially overlapping.

10. Electrical machine according to one of Claims 6 to 9,
**characterized**
**in that** the magnetic lines of force of the magnet pair are directed radially.

11. Electrical machine according to one of Claims 6 to 10,
**characterized**
**in that** two successive magnet pairs are formed with an opposite magnetic flux direction.

12. Electrical machine according to one of Claims 6 to 11,
**characterized**
**in that** two successive magnet pairs are arranged at a distance from one another.

13. Electrical machine according to one of the preceding claims,
**characterized**
**in that** the field coil (51 to 55) is de-energized when the rotor (4) assumes a rotation position at which those sections of the field coil (51 to 55) which enter the air gap in the permanent magnet ring (41, 42) are located outside the air gap.

14. Electrical machine according to one of the preceding claims,
**characterized**
**in that** the field coils (51 to 55) form a self-supporting winding former (5w) preferably in the form of a pot.

15. Electrical machine according to Claim 14,
**characterized**
**in that** the winding former (5w) is embedded in an encapsulation compound.

16. Electrical machine according to one of the preceding claims,
**characterized**
**in that** the field coils (51 to 55) are at least partially formed from flat-ribbon material.

17. Electrical machine according to Claim 16,
**characterized**
**in that** the flat-ribbon material is a film body with an electrically insulating supporting film and an electrically conductive layer arranged on the supporting film.

## Revendications

1. Machine électrique avec un rotor (4) et un stator (5), présentant des bobines de champ (51 à 55) sans noyau, reliées à une unité de commande (6), et des anneaux magnétiques permanents (41, 42) avec un entrefer annulaire,
**caractérisée en ce que**
la machine électrique se compose de deux machines partielles identiques, dans laquelle les corps d'enroulement (5w) des deux machines sont disposés sur une platine de support (5p) en étant tournés l'un vers l'autre et **en ce qu'**au moins une partie de l'unité de commande (6) est disposée directement au niveau des bobines de champ (51 à 55).

2. Machine électrique selon l'une quelconque des revendications précédentes, **caractérisée en ce que** l'unité de commande (6) est une unité de commande pour la modulation en d'impulsions en largeur.

3. Machine électrique selon l'une quelconque des revendications précédentes, **caractérisée en ce que** des éléments de commutation de puissance électroniques de l'unité de commande (6) sont disposés sur un substrat de support commun.

4. Machine électrique selon la revendication 3, **caractérisée en ce que** plusieurs éléments de commutation de puissance électroniques présentent un blindage de protection commun.

5. Machine électrique selon l'une quelconque des revendications précédentes, **caractérisée en ce que** des capteurs à effet de Hall (6h) sont prévus pour déterminer la position de rotation du rotor (4).

6. Machine électrique selon l'une quelconque des revendications précédentes, **caractérisée en ce que** chacun des anneaux magnétiques permanents (41, 42) est réalisé à partir de 2 * n paires d'aimants, et **en ce que** pour chaque anneau magnétique permanent (41, 42) m * n bobines de champ sont prévues qui forment n unités de bobines de champ qui plongent par endroits dans l'entrefer annulaire.

7. Machine électrique selon la revendication 6, **caractérisée en ce que** le nombre m des bobines de champ (51 à 55) d'une unité de bobines de champ est m ≥ 1, de préférence m = 3 à 5.

8. Machine électrique selon la revendication 6 ou 7, **caractérisée en ce que** respectivement la première à m-ème des m bobines de champ (51 à 55) d'une unité de bobines de champ forment un groupe de bobines de champ pouvant être commandé indépendamment les unes des autres qui est relié à respectivement l'un des m étages finaux de l'unité de commande.

9. Machine électrique selon l'une quelconque des revendications 6 à 8, **caractérisée en ce que** les m bobines de champ (51 à 55) sont disposées en se recouvrant partiellement.

10. Machine électrique selon l'une quelconque des revendications 6 à 9, **caractérisée en ce que** les lignes de champ magnétique de la paire d'aimants sont orientées radialement.

11. Machine électrique selon l'une quelconque des revendications 6 à 10, **caractérisée en ce que** deux paires d'aimants consécutives sont réalisées avec une direction de flux magnétique opposée.

12. Machine électrique selon l'une quelconque des revendications 6 à 11, **caractérisée en ce que** deux paires d'aimants consécutives sont disposées de façon espacée l'une de l'autre.

13. Machine électrique selon l'une quelconque des revendications précédentes, **caractérisée en ce que** la bobine de champ (51 à 55) est mise hors tension lorsque le rotor (4) occupe une position de rotation dans laquelle les portions de la bobine de champ (51 à 55) plongeant dans l'entrefer de l'anneau magnétique permanent (41, 42) se trouvent en dehors de l'entrefer.

14. Machine électrique selon l'une quelconque des revendications précédentes, **caractérisée en ce que** les bobines de champ (51 à 55) forment un corps d'enroulement (5w) en porte-à-faux, de préférence en forme de cuvette.

15. Machine électrique selon la revendication 14, **caractérisée en ce que** le corps d'enroulement (5w) est encastré dans un enrobage.

16. Machine électrique selon l'une quelconque des revendications précédentes, **caractérisée en ce que** les bobines de champ (51 à 55) sont réalisées au moins par endroits à partir d'un matériau de ruban.

17. Machine électrique selon la revendication 16, **caractérisée en ce que** le matériau de ruban est un corps de feuille avec une feuille de support électriquement isolante et une couche électriquement conductrice disposée sur la feuille de support.
